# EUROPEAN PATENT APPLICATION

(11) **EP 4 610 852 A1**
(43) Date of publication of application: **03.09.2025**
(21) Application number: 25160887.3
(22) Date of filing: 28.02.2025
(51) Int. Cl.: G06F 16/9032

(54) **METHOD OF RECOMMENDING REGISTERED PROMPT OR PLUG-IN IN GENERATIVE ARTIFICIAL INTELLIGENCE-BASED CONVERSATION SERVICE, AND COMPUTING DEVICE USING SAME**

(30) Priority: 29.02.2024 KR 20240029981; 29.05.2024 KR 20240069857
(71) Applicant: Samsung SDS Co., Ltd., Seoul 05510 (KR)
(72) Inventor: Jeong, Andy, 05510 Songpa-gu, Seoul (KR); Lee, Daniel, 05510 Songpa-gu, Seoul (KR); Kim, Seungjin, 05510 Songpa-gu, Seoul (KR)
(74) Representative: Grünecker Patent- und Rechtsanwälte PartG mbB

(57) **Abstract**

A method of recommending a registered prompt or recommending a plug-in service in a generative artificial intelligence-based conversation service, and a computing device using the same, and the recommendation method may include an operation of generating a predicted query message that is generated by predicting an additional query message to be input by a user, based on a first query message input by the user and a first response message generated in the conversation service in response to the first query message, and an operation of extracting and providing a recommended prompt or a recommended plug-in corresponding to the predicted query message from among a plurality of registered prompts or a plurality of plug-ins.

## Description

### CROSS-REFERENCE TO RELATED APPLICATIONS

This application claims the benefit under 35 U.S.C. 119 of Korean Patent Application No. 10-2024-0029981, filed on February 29, 2024, in the Korean Intellectual Property Office, and Korean Patent Application No. 10-2024-0069857, filed on May 29, 2024, in the Korean Intellectual Property Office, the entire disclosures of which are incorporated herein by reference for all purposes.

### BACKGROUND

### 1. Field

The following description relates to a method of recommending an appropriate registered prompt or plug-in to a user in a generative artificial intelligence-based conversation service, and a computing device using the same.

### 2. Description of Related Art

An artificial intelligence-based conversation service provides various plug-ins or the like integrated with a large language model, and provides previously registered prompts or the like for users. Therefore, users may be provided with extended services via plug-ins, and may conveniently query about required matters by using prompts provided.

In this instance, the range of use of a large language model is increased, and the number of plug-ins is also increased. Accordingly, users may not know which plug-ins exist and have difficulty in selecting appropriate plug-ins. That is, users have utilized a scheme of retrieving and selecting plug-ins personally, and inputting prompts to obtain desired results by themselves.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a general aspect, a processor-implemented method of recommending a registered prompt or recommending a plug-in in a generative artificial intelligence-based conversation service provided by a computing device, the method includes generating a predicted query message that is generated by predicting an additional query message to be input by a user, based on a first query message input by the user and a first response message generated in the conversation service in response to the first query message; and extracting and providing a recommended prompt or a recommended plug-in corresponding to the predicted query message from among a plurality of registered prompts or a plurality of plug-ins.

The generating of the predicted query message may include generating the predicted query message by inputting a first prompt that requests generating the predicted query message, while providing the first query message and the first response message to a large language model (LLM).

The generating of the predicted query message may include searching a conversation history database for a similar conversation history corresponding to a message pair of the first query message and the first response message, including the similar conversation history in the first prompt, and inputting the first prompt to the large language model, and wherein the similar conversation history may further include a second query message corresponding to the additional query message.

The generating of the predicted query message may include searching a conversation history database for a similar conversation history corresponding to a message pair of the first query message and the first response message, and extracting a second query message corresponding to the additional query message from the similar conversation history, to generate the predicted query message.

The generating of the predicted query message may include generating a target vector corresponding to the message pair of the first query message and the first response message by using an embedding model, searching the conversation history database for a first vector of which a similarity to the target vector is greater than or equal to a predetermined value, and extracting the similar conversation history, and the conversation history database converts a message pair of a query message input by the user or input by another user and a response message corresponding to the query message, into a the first vector by using the embedding model, and stores the first vector.

The generating of the predicted query message may include generating the predicted query message corresponding to the first query message and the first response message based on a conversation prediction model, and the conversation prediction model may be generated via a machine learning process performed using, as training data, each message pair of a query message and a response message, and an additional query message corresponding to the message pair.

The providing of the recommended prompt may include inputting, to a large language model, a second prompt that requests recommending the registered prompt or recommending the plug-in, while providing description information of each of a plurality of predefined registered prompts of the plurality of registered prompts or the plurality of plug-ins, the first query message, the first response message, and the predicted query message, so as to generate the recommended prompt or the recommended plug-in.

The providing of the recommended prompt may include generating respective vectors for the predicted query message and registered query messages configured for a plurality of predefined registered prompts of the plurality of registered prompts or the plurality of plug-ins, and generating the recommended prompt or the recommended plug-in corresponding to the predicted query message based on similarities between the respective vectors.

The providing of the recommended prompt may include extracting the recommended prompt or the recommended plug-in corresponding to the predicted query message by using a recommendation model, and wherein the recommendation model may be generated via a machine learning process performed using, as training data, a recommended prompt or recommended plug-in model corresponding to each query message.

The generating of the predicted query message may include generating a plurality of predicted query messages based on a large language model, a similarity to a conversation history, and a conversation prediction model, wherein the providing of the recommended prompt may include recommending a registered prompt of the plurality of registered prompts or a registered plug-in of the plurality of registered plug-ins corresponding to each of the plurality of predicted query messages, based on the large language model, similarities to query messages configured for a plurality of predefined registered prompts or plug-ins, and a recommendation model, and wherein the recommended prompt or the recommended plug-in may be determined based on a number of times that each registered prompt or registered plug-in is recommended.

The providing of the recommended prompt may include providing, as the recommended prompt or recommended plug-in, a prompt or a plug-in that is recommended a number of times greater than or equal to a predetermined value, or of which a rank based on the number of times of recommendation is greater than or equal to a predetermined rank.

The providing of the recommended prompt may include, when a plurality of registered prompts or plug-ins exist that are recommended a number of times greater than or equal to the predetermined value, providing all the registered prompts or plug-ins as the recommended prompts or the recommended plug-ins.

In a general aspect a computing device, including one or more processors, and configured to recommend a registered prompt or recommend a plug-in in a generative artificial intelligence-based conversation service, wherein the one or more processors are configured to: generate a predicted query message that is generated by predicting an additional query message to be input by a user, based on a first query message input by the user and a first response message generated in the conversation service in response to the first query message; and extract and provide a recommended prompt or a recommended plug-in corresponding to the predicted query message from among a plurality of registered prompts or a plurality of plug-ins.

The generating of the predicted query message may include generating the predicted query message by inputting a first prompt that requests generating the predicted query message, while providing the first query message and the first response message to a large language model (LLM).

The generating of the predicted query message may include searching a conversation history database for a similar conversation history corresponding to a message pair of the first query message and the first response message, and extracting a second query message corresponding to the additional query message from the similar conversation history, to generate the predicted query message.

The generating of the predicted query message may include generating the predicted query message corresponding to the first query message and the first response message by using a conversation prediction model, and wherein the conversation prediction model may be generated via a machine learning process performed using, as training data, each message pair of a query message and a response message and an additional query message corresponding to the message pair.

The providing of the recommended prompt may include inputting, to a large language model, a second prompt that requests recommending the registered prompt or recommending the plug-in, while providing description information of each of a plurality of predefined registered prompts of the plurality of registered prompts or the plurality of plug-ins, the first query message, the first response message, and the predicted query message, so as to generate the recommended prompt or the recommended plug-in.

The providing of the recommended prompt may include generating respective vectors for the predicted query message and registered query messages configured for a plurality of predefined registered prompts of the plurality of registered prompts or the plurality of plug-ins, and generating the recommended prompt or the recommended plug-in corresponding to the predicted query message based on similarities between the respective vectors.

The providing of the recommended prompt may include extracting the recommended prompt or the recommended plug-in corresponding to the predicted query message by using a recommendation model, and wherein the recommendation model may be generated via a machine learning process performed using, as training data, a recommended prompt or recommended plug-in corresponding to each query message.

Other features and aspects will be apparent from the following detailed description, the drawings, and the claims.

### BRIEF DESCRIPTION OF DRAWINGS

FIG. 1 is a diagram schematically illustrating a generative Al-based conversation service system, in accordance with one or more embodiments.
FIG. 2 is a diagram illustrating a registered prompt recommendation by a conversation service system, in accordance with one or more embodiments.
FIG. 3A is a diagram illustrating a plug-in recommendation by a conversation service system, in accordance with one or more embodiments.
FIG. 3B is a diagram illustrating the execution of a recommended plug-in by a conversation service system, in accordance with one or more embodiments.
FIG. 4 is a block diagram illustrating a conversation service device and a recommendation device, in accordance with one or more embodiments.
FIG. 5 is a block diagram illustrating operation of a response generator, in accordance with one or more embodiments.
FIG. 6 is a diagram illustrating a prompt of a response generator, in accordance with one or more embodiments.
FIG. 7 is a block diagram illustrating operation of a conversation management device, in accordance with one or more embodiments.

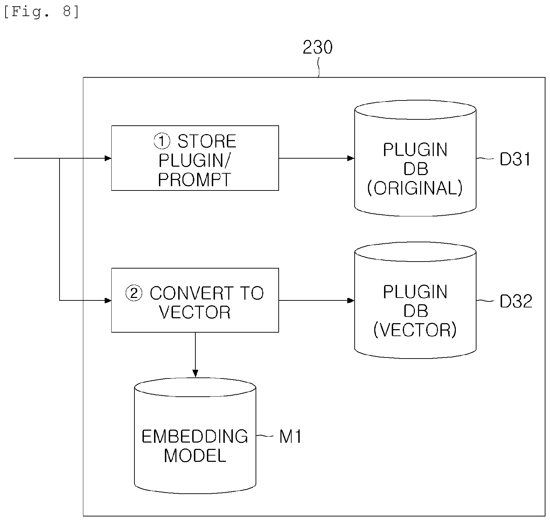

FIG. 8 is a block diagram illustrating operation of a plug-in management device, in accordance with one or more embodiments.
FIG. 9 is a diagram illustrating data stored in a plug-in DB, in accordance with one or more embodiments.
FIG. 10 is a block diagram illustrating operation of a conversation prediction device, in accordance with one or more embodiments.
FIG. 11A is a diagram illustrating a first prompt to perform LLM-based prediction, in accordance with one or more embodiments.
FIG. 11B is a diagram illustrating a first prompt that includes retrieved similar conversation history and is used for performing LLM-based prediction, in accordance with one or more embodiments.
FIG. 12A is a diagram illustrating a query message and a response message, in accordance with one or more embodiments.
FIG. 12B is a diagram illustrating similarity-based prediction, in accordance with one or more embodiments.
FIG. 13A illustrates a table that includes a first query message, a first response message, and their target vector, in accordance with one or more embodiments.
FIG. 13B illustrates a conversation history database that includes query messages, response messages, and their vectors, in accordance with one or more embodiments.
FIG. 14A illustrates a table in which an additional query message, input after a message pair consisting of a query message and a response message, is labeled as the correct answer for the message pair based on existing conversation history.
FIG. 14B is a diagram illustrating a model-based prediction, in accordance with one or more embodiments.
FIG. 15 is a diagram illustrating an LLM-based plug-in recommendation, in accordance with one or more embodiments.
FIG. 16 is a diagram illustrating a similarity-based plug-in recommendation, in accordance with one or more embodiments.
FIG. 17A illustrates a table in which plug-ins that are executed in response to query messages are labeled as the correct answers for the corresponding query messages.
FIG. 17B is a diagram illustrating a model-based plug-in recommendation, in accordance with one or more embodiments.
FIG. 18 is a diagram illustrating determination of a recommended plug-in, in accordance with one or more embodiments.
FIG. 19 is a block diagram illustrating a recommendation device, in accordance with one or more embodiments.
FIG. 20 is a block diagram illustrating a method of recommending a registered prompt or a plug-in service in a generative artificial intelligence-based conversation service, in accordance with one or more embodiments.

Throughout the drawings and the detailed description, unless otherwise described, the same reference numerals refer to the same elements. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as "on," "connected to," "coupled to," or "joined to" another component, element, or layer, it may be directly (e.g., in contact with the other component, element, or layer) "on," "connected to," "coupled to," or "joined to" the other component element, or layer, or there may reasonably be one or more other components elements, or layers intervening therebetween. When a component or element is described as "directly on", "directly connected to," "directly coupled to," or "directly joined to" another component element, or layer, there can be no other components, elements, or layers intervening therebetween. Likewise, expressions, for example, "between" and "immediately between" and "adjacent to" and "immediately adjacent to" may also be construed as described in the foregoing.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example" or "embodiment" herein have a same meaning (e.g., the phrasing "in one example" has a same meaning as "in one embodiment", and "one or more examples" has a same meaning as "in one or more embodiments").

Hereinafter, reference will now be made to example embodiments, which are illustrated in the accompanying drawings, wherein like reference numerals may refer to like components throughout and duplicated description thereof will be omitted. An ending word used for an element, such as "module" and "unit", is assigned or used for ease of drafting the specifications, and may not have a distinguishing meaning or role. That is, the term, "unit", used in the present disclosure may refer to a software element or a hardware element such as "FPGA" or "ASIC", and "unit" may perform some functions. However, "unit" is not limited to software or hardware. "unit" may be configured to be contained in an addressable storage medium, or may be configured to reproduce one or more processors. Therefore, for example, "unit" may include elements, such as software elements, object-oriented software elements, class elements, and task elements, processes, functions, attributes, procedures, sub-routines, segments of a program code, drivers, firmware, microcode, circuit, data, database, data structures, tables, arrays, and variables. Functions provided in the elements and "units" may be implemented by coupling a smaller number of elements and "units" or may be further distributed to additional elements and "units".

In addition, when it is determined that detailed descriptions related to a well-known related technical art will make the subject matter of the embodiments disclosed in the specification unclear, the detailed descriptions will be omitted herein. In addition, the attached drawings are merely for help a sufficient understanding of embodiments disclosed in the specification, and it should be understood, however, that the technical idea disclosed in the specification is not limited to the attached drawings, but to the contrary, example embodiments are to cover all modifications, equivalents, and alternatives falling within the idea of the present disclosure and technical scope thereof.

One or more examples may provide a method of recommending a registered prompt or a plug-in in a generative artificial intelligence-based conversation service, which predicts a query message to be input by a user, and recommends a plug-in or a registered prompt to the user based on the predicted query message, and provides a computing device using the same.

One or more examples may also provide a method of recommending a registered prompt or a plug-in in a generative artificial intelligence-based conversation service, which automatically recommends a registered prompt or a plug-in needed for a user in consideration of a context provided during a conversation with the user, and provides a computing device using the same.

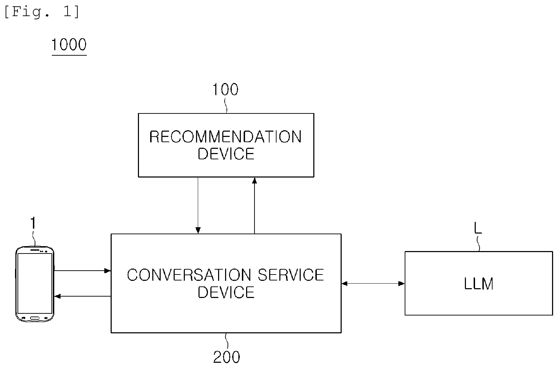

FIG. 1 is a diagram schematically illustrating a generative Al-based conversation service system, in accordance with one or more embodiments.

Referring to FIG. 1, a generative Al-based conversation service system 1000, in accordance with one or more embodiments, may include a terminal device 1, a recommendation device 100, a conversation service device 200, and a large language model (LLM, L).

Hereinafter, with reference to FIG. 1, the conversation service system 1000, in accordance with one or more embodiments, will be described.

The terminal device 1 may perform communication with the conversation service server 200 or the like using a wired or wireless communication network. By using the terminal device 1, a user may be provided with various types of generative Al-based services such as a conversation service or the like provided by the conversation service device 200.

The terminal device 1 may include a communication device for information transmission or reception, a memory that stores instructions, programs and protocols, a processor that executes various programs to perform operations and control, or the like. Here, the terminal device 1 may be a mobile terminal such as, but not limited to, a smartphone, a tablet personal computer (PC), or the like, or may be a stationary terminal such as, but not limited to, a desktop or the like. For example, the terminal device 1 may include a cell phone, a smartphone, a laptop computer, a digital broadcasting terminal, a personal digital assistant (PDA), a portable multimedia player (PMP), a slate PC, a tablet PC, an ultrabook, a wearable device (e.g., smartwatch, smart glasses, head mounted display), or the like.

A communication network may include a wired network and a wireless network, and specifically, may include various networks such as a local area network (LAN), a metropolitan area network (MAN), a wide area network (WAN), or the like. In addition, a communication network may include World Wide Web (WWW) that is publicly known. In this instance, the communication network according to the present disclosure is not limited to the above-mentioned networks, and may include a publicly known wireless data network, a publicly known telephone network, a publicly known wired or wireless television network, or the like.

By interoperating with the conversation service device 200, the recommendation device 100 may provide a recommendation service that recommends a registered prompt or a plug-in provided by the conversation service device 200. That is, based on a conversation between the terminal device 1 and the conversation service device 200, the recommendation device 100 may predict a subsequent query message to be input by a user, and may recommend a registered prompt or a plug-in to be used by the user based on the predicted query message.

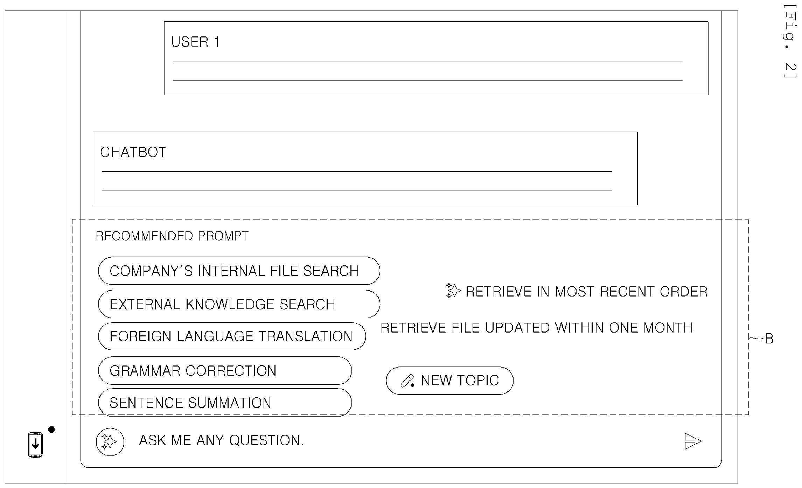

Here, the registered prompt may be a query list or a template of a corresponding query that is registered in advance so as to generate an effective response to a query or the like that a user frequently uses. That is, a user may easily obtain an accurate response appropriate for the intention of the user by utilizing a query message or the like designed in advance by a specialist, rather than by personally inputting a query message and requesting a response from the conversation service device 200. Therefore, for a query or the like that is predicted to be frequently or usefully used by a user, a manager or the like of the conversation service device 200 may generate and store a registered prompt in advance. Subsequently, a user may receive a response to a desired query conveniently by selecting any one of the registered prompts. Referring to FIG. 2, a user may receive a registered prompt, such as "company's internal file search", "external knowledge search", "foreign language translation", "grammar correction", "sentence summation", or the like, as a recommended prompt (B) while having a conversation with the conversation service device 200, and when the user selects one of them, the corresponding registered prompt is executed and the user may receive a service.

In addition, a plug-in may be an LLM-based application provided by the conversation service device 200, and may be provided in a form of being integrated with a legacy system's service in the conversation service. That is, the user may query with natural language via the conversation service, and a plug-in may provide a corresponding legacy system's service based on an item queried about by the user. Here, the plug-in may include various services such as a knowledge-grounded conversation (retrieval augmented generation (RAG)) service, a data analysis (code interpreter) service, an LLM-integrated service, an API-integrated service, or the like.

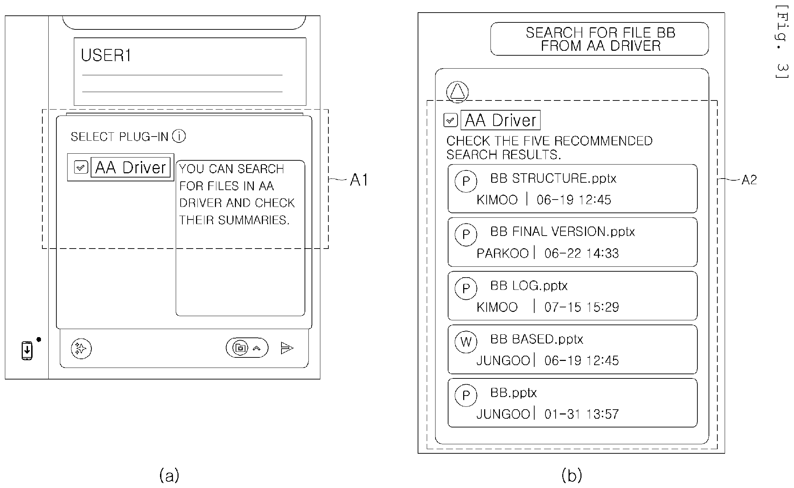

Specifically, as illustrated in FIG. 3A, a user may receive a recommendation for an "AA Driver" plug-in available during a conversation with the conversation service device 200 as shown in the diagram A1, and as illustrated in FIG. 3B, after executing the "AA Driver" plug-in, when the user queries with natural language such as "Find out file BB from AA Driver", the user may receive a file search service provided by "AA Driver" or the like as shown in the diagram A2.

Although FIG. 1 illustrates the recommendation device 100 as a separate device from the conversation service device 200, the recommendation device 100 in some embodiments may be embodied to be installed in the conversation service device 200 or may be included as a service executed in the conversation service device 200.

The conversation service device 200 may provide, to the terminal device 1, various types of generative Al-based services such as a conversation service or the like. Although FIG. 1 illustrates the case in which the conversation service device 200 is directly connected to the terminal device 1, in some embodiments, the conversation service device 200 is connected to a service server (not illustrated) or the like and may provide a conversation service to the terminal device 1 via the service server.

The conversation service device 200 may generate response messages to various queries or the like input by a user through the terminal device 1, by interoperating with a large language model (L). Here, the large language model (L) may include Llama, OpenBuddy, Azure OpenAl, or the like, but it is not limited thereto and various other models may be utilized. The large language model (L) may be fine-tuned to be utilized for the conversation service device 200. In some embodiments, a large language model (L) dedicated for the conversation service device 200 may be developed and utilized.

The conversation service device 200 may provide a conversation service to a user, and may provide a registered prompt or a plug-in for user convenience. In this instance, a user may have difficulty in recognizing all registered prompts or plug-ins provided by the conversation service device 200, and there is a need for recommending a registered prompt or a plug-in or the like appropriate for the situation of the user.

A typical method is designed to call an appropriate plug-in or registered prompt based on various user's utterance inputs according to an empirical method. However, in many examples according to this method, the utilization of a plug-in or a registered prompt by a user is inefficient and plug-ins supported in a conversation service are increasingly diversified. Accordingly, only with the empirical method, it is difficult to efficiently and appropriately recommend a plug-in or a registered prompt.

The conversation service system 1000 according to an embodiment of the present disclosure may include the recommendation device 100, and may provide a recommendation for a plug-in to be subsequently used or a query to be subsequently input by a user, based on a query message from the user and a response message corresponding thereto, by using the recommendation device 100. Therefore, the system may automatically generate a recommended prompt in time in an environment that the user desires and provide an appropriate prompt to the user, or may recommend a plug-in appropriate for a user's conversation history or context.

For example, when a user inputs a query message "Recommend me must-visit restaurants in Seoul", the conversation service device 100 may generate a response message "Must-visit restaurants in Seoul are XX, YY, and ZZ". In this instance, the recommendation device 100 may predict that the user is to input a query associated with booking a table at a restaurant, and may recommend a registered prompt "Please book a table at restaurant XX for OO o'clock" or may recommend execution of a plug-in that provides a "restaurant booking" operation.

Hereinafter, the recommendation device 100 and the conversation service device 200 according to an embodiment of the present disclosure will be described.

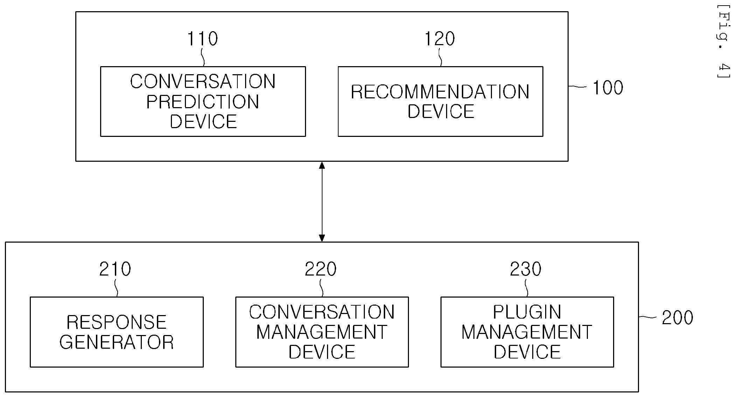

FIG. 4 is a block diagram illustrating a conversation service device and a recommendation device according to an embodiment of the present disclosure.

Referring to FIG. 4, the recommendation device 100 according to an embodiment of the present disclosure may include a conversation prediction device 110 and a recommendation device 120, and the conversation service device 200 may include a response generator 210, a conversation management device 220, and a plug-in management device 230.

When a query message input by a user is received from the terminal device 1, the response generator210 may generate a response message corresponding to the query message. That is, the response generator 210 may interoperate with a large language model (L), and may generate the response message corresponding to the query message from the user by prompting the large language model (L) with the query message.

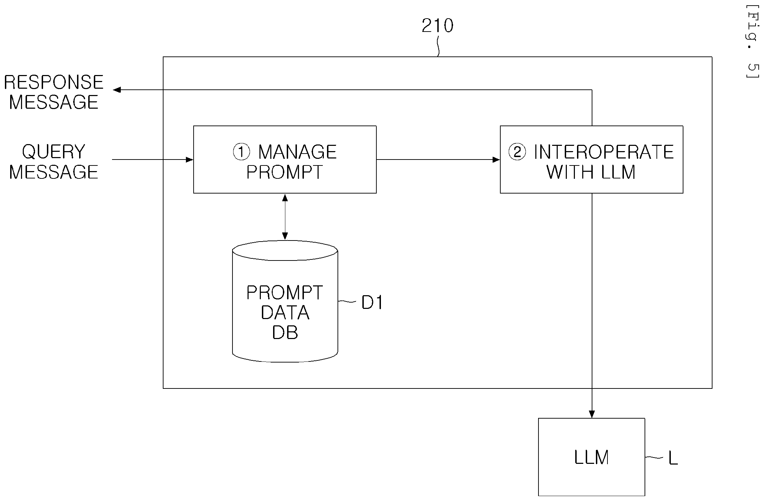

Referring to FIG. 5, when a query message is input, the response generator 210 may generate a prompt to be suitable for a format supported by a corresponding large language model (L). That is, a prompt format corresponding to each large language model (L) may be stored in a prompt data DB (D1), and a prompt corresponding to a query message may be generated by referring to the prompt data DB (D1). Subsequently, the response generator 210 may input the corresponding prompt to a large language model (L), and may receive a corresponding response message from the large language model (L). The provided response message may be transmitted to the terminal device 1 for provision to a user.

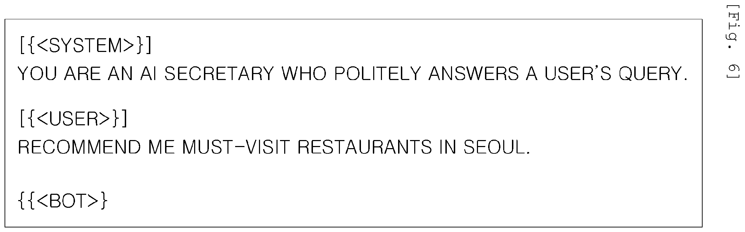

For example, when a user inputs "Recommend me must-visit restaurants in Seoul" as a query message, the response generator 210 may generate a prompt as illustrated in FIG. 6. In an example, the prompt may include the user's query message "Recommend me must-visit restaurants in Seoul" together with a system prompt such as "You are an AI secretary who politely answers a user's query", and based thereon, may request "<BOT>" to generate a response corresponding thereto. That is, in addition to a request requesting the large language model (L) to generate a response to the user's query message, a system prompt that sets a persona or the like so as to generate a response appropriate for the intention of the user may be further included. In an example, each system prompt may be configured for each large language model (L) and may be stored in the prompt data DB (D1).

The conversation management device 220 may store and manage a conversation history or the like made in a conversation service between a user and the conversation service device 200. That is, the conversation management device 220 may store and manage all conversation histories generated respectively by a plurality of users.

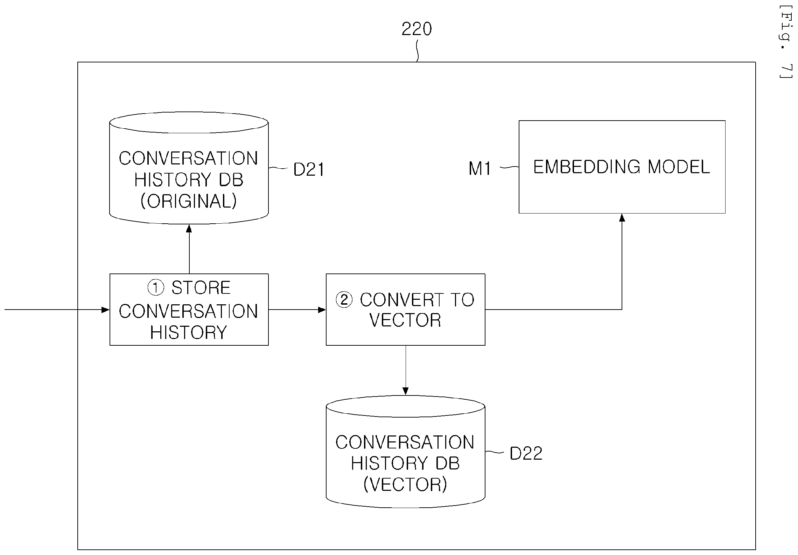

For example, as illustrated in FIG. 7, the conversation management device 220 may store a conversation history including a query message of a user and a response message corresponding thereto, in an original text form in a conversation history DB (original) (D21).

In addition, in some embodiments, text included in a conversation history may be vectorized based on an embedding model (M1), and all vectors may be stored in a conversation history DB (vector) (D22). That is, each conversation history may be vectorized and stored in advance in the conversation history DB (vector) (D22) to obtain a similarity or the like between a past conversation history and a currently input query message. In this instance, the conversation management device 220 may generate each message pair of a query message and a response message corresponding thereto included in a conversation history, may convert the message pair into a single vector, and may store the same. Here, the embedding model is to encode each text and convert the same into a vector format, and may be embodied as various types of transformer models, for example, bidirectional encoder representations from transformers (BERT) or the like.

The plug-in management device 230 may store and manage each registered prompt and plug-in provided by the conversation service device 200. For example, when storing each plug-in or registered prompt, a manager or the like of the conversation service device 200 may input description information or the like that describes a corresponding plug-in or registered prompt, together, and the plug-in management device 230 may store the input description information in a plug-in DB (original) (D31). In addition, in some embodiments, description information associated with each plug-in or registered prompt may be vectorized by using the embedding model (M1), and the vectorized description information may be stored in a plug-in DB (vector) (D32).

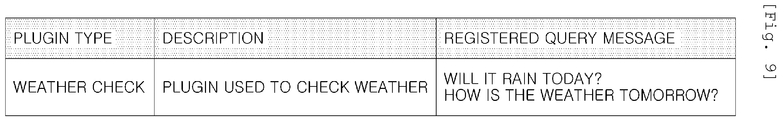

For example, as illustrated in FIG. 9, in the case of a "weather check" plug-in, "plugin for checking weather" may be stored as description information. In addition, the plug-in management device 230 may also store, as a registered query message, a query message such as "Will it rain today?", "How is the weather tomorrow?" or the like which is frequently input when the corresponding "weather check" plug-in is used. That is, by registering a query message associated with the use of the corresponding plug-in in advance, the query message may be utilized for recommending a plug-in. In this instance, although FIG. 9 illustrates an example of a plug-in, description information and a registered query message may be included and stored in the plug in a DB (D31, D32) in the same manner for each registered prompt. Through the above, when recommending a registered prompt, description information, a registered query message, or the like may be utilized.

The conversation prediction device 110 may predict an additional query message to be input by a user based on a first query message input to a conversation service by the user and a first response message generated in the conversation service in response to the first query message, and may generate a predicted query message. That is, based on the query message input by the user and the response message corresponding thereto, the conversation prediction device 110 may predict the additional query message to be subsequently input by the user, and may generate the predicted query message.

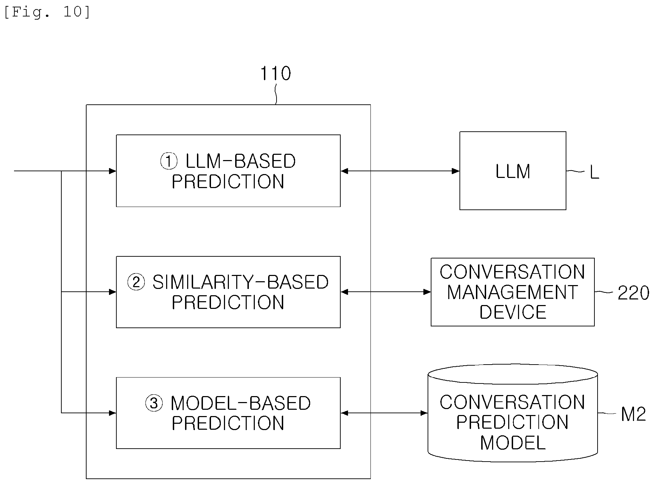

Specifically, referring to FIG. 10, the conversation prediction device 110 may perform LLM-based response prediction, similarity-based response prediction, and model-based response prediction, so as to generate a predicted query message. A method of generating a predicted query message by the conversation prediction device 110 is not limited thereto, and various other methods may be used to generate a predicted query message.

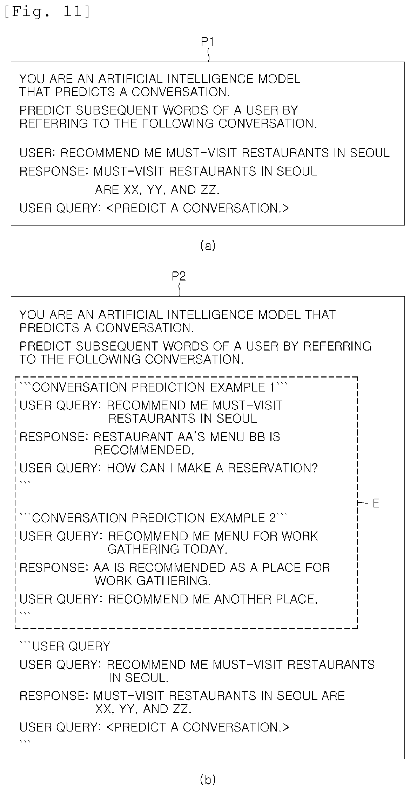

In the case of the LLM-based response prediction, the conversation prediction device 110 may generate a first prompt that requests generating a predicted query message based on a first query message and a first response message, and may input the generated first prompt to a large language model (L) so as to generate a predicted query message. That is, a first prompt (P1) may be generated as illustrated in FIG. 11A, and the large language model (L) may predict and generate an additional query message to be subsequently input by a user, based on a first query message "Recommend me must-visit restaurants in Seoul" and a first response message "Must-visit restaurants in Seoul are XX, YY, and ZZ".

In an example, the conversation prediction device 110 may generate an additional prompt (P2) further including an example of an additional query message in the first prompt (P1), so as to generate a predicted query message. That is, the large language model (L) may be prompted based on few shot learning so that the accuracy of a predicted query message that the large language model (L) generates may be increased. In this instance, for few shot learning, the conversation prediction device 110 may search for a similar conversation history corresponding to a message pair of the first query message and the first response message from the conversation history DB (D22), and may further include the retrieved similar conversation history in the first prompt and input the same to the large language model (L). For example, it may generate a target vector corresponding to the message pair of the first query message and the first response message, may obtain a similarity between the corresponding target vector and each vector in the conversation history DB (D22), and may extract, as a corresponding similar conversation history, a conversation history corresponding to a vector with a highest similarity.

Referring to FIG. 11B, it is identified that the similar conversation history corresponding to the message pair of the first query message "Recommend me must-visit restaurants in Seoul" and the first response message "Must-visit restaurants in Seoul are XX, YY, and ZZ" is included in the additional prompt (P2) as an example (E).

Here, "How can I make a reservation" or "Recommend other places" corresponding to an additional query message may be further included in the retrieved similar conversation history (E). Therefore, the large language model (L) may generate a predicted query message corresponding to an additional query message to be input by a user after the first response message in the current conversation with the user, by referring to each additional query message included in the example (E). That is, a context provided in the similar conversation history provided as an example or the like may be taken into consideration and thus, the accuracy of prediction for a predicted query message generated by the large language model (L) may be increased.

In addition, in the example of the similarity-based response prediction, the conversation prediction unit 110 may search for a similar conversation history corresponding to the message pair of the first query message and the first response message from the conversation history DB (D22), and may extract a second query message corresponding to an additional query message from the retrieved similar conversation history, so as to generate a predicted query message.

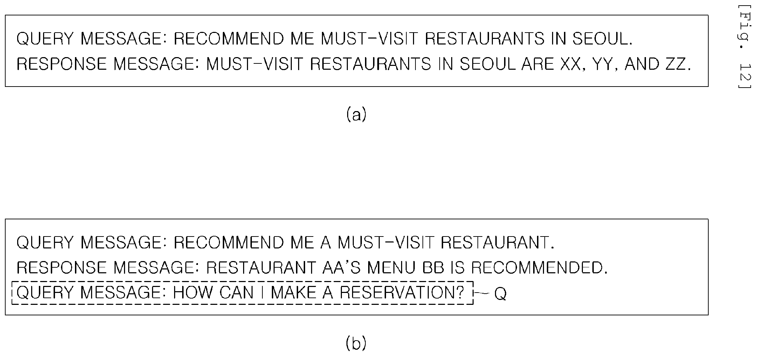

Referring to FIG. 12A, a user may input "Recommend me must-visit restaurants in Seoul" as the first query message, and the conversation service may generate "Must-visit restaurants in Seoul are XX, YY, and ZZ" as the first response message in response thereto. In this instance, as illustrated in FIG. 12B, the conversation prediction unit 110 may search for a similar conversation history corresponding to the message pair of the first query message and the first response message. That is, the similar conversation history may be the case in which a query message is "Recommend me a must-visit restaurant" and a response message is "Restaurant AA's menu BB is highly recommended", and "How can I make a reservation?" is subsequently input as an additional query message. Here, the conversation prediction unit 110 may extract "How can I make a reservation?" which is the additional query message (Q) of a user included in the similar conversation history, and may generate the same as a predicted query message in the ongoing conversation.

Specifically, the conversation prediction device 110 may generate a target vector corresponding to the message pair of the first query message and the first response message by using the embedding model (M1), may search the conversation history DB (D22) for a vector of which a similarity to the target vector is greater than or equal to a predetermined value, and may extract the same as the similar conversation history. In this instance, the conversation history DB (D22) may convert message pairs of query messages input by a user or other users, and response messages corresponding to the query messages into vectors by using the embedding model (M1), and may store the same in advance. In an example, a similarity between vectors may be obtained using various schemes such as a cosine similarity, a Euclidean distance, or the like, and any scheme that is capable of obtaining a similarity between vectors may be used.

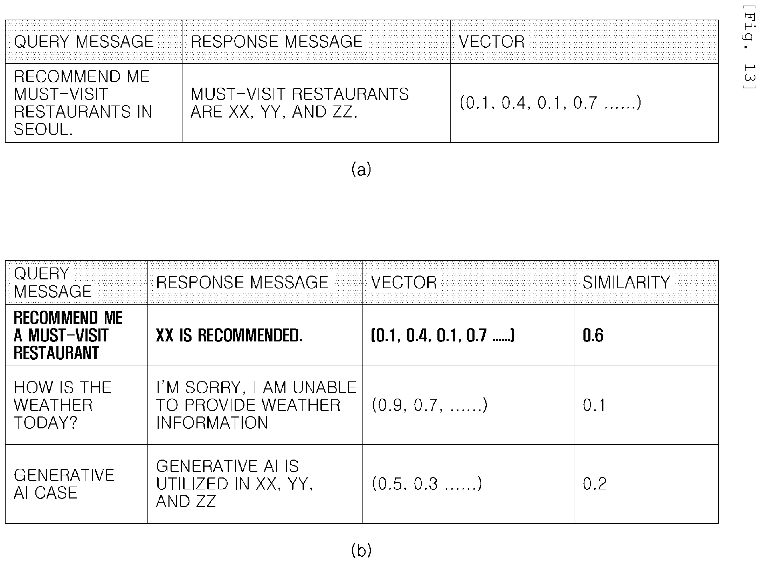

Referring to FIG. 13A, by converting the message pair of the first query message "Recommend me must-visit restaurants in Seoul" and the first response message "Must-visit restaurants in Seoul are XX, YY, and ZZ" into a vector, a target vector of (0.1, 0.4, 0.1, 0.7, ...) may be generated. Subsequently, with reference to FIG. 13B, the conversation prediction unit 110 may obtain a similarity between the target vector and each vector stored in the conversation history DB (D22), and a vector for the message pair of "Recommend me a must-visit restaurant" and "XX is recommended" is (0.1, 0.4, 0.1, 0.7, ...), and thus a similarity to the target vector is 0.6. The similarities to the remaining vectors stored in the conversation history DB (D22) are 0.1 and 0.2 and thus, the conversation prediction unit 110 may extract the message pair of "Recommend me a must-visit restaurant" and "XX is recommended", which has a highest similarity, as a similar conversation history. Therefore, "How can I make a reservation?" which is an additional query message subsequent to "Recommend me a must-visit restaurant" and "XX is recommended" included in the similar conversation history may be generated as a predicted query message.

In the example of the model-based response prediction, the conversation prediction unit 110 may generate a predicted query message corresponding to the first query message and the first response message, by using a previously generated conversation prediction model. Here, the conversation prediction model is generated via machine learning using training data, and the training data may be generated using each message pair of a query message and a response message and an additional query message input after the corresponding message pair.

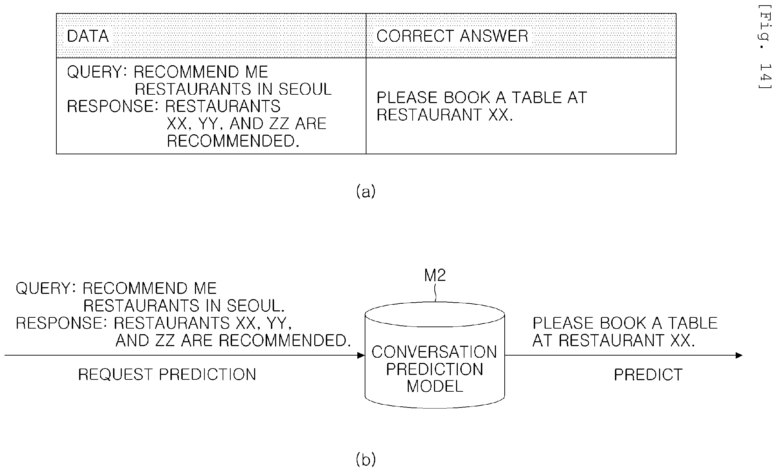

Referring to FIG. 14A, a message pair of a query message input by a user and a response message corresponding thereto may be generated from an existing conversation history, and an additional query message input after the corresponding message pair may be labeled as a correct answer for the corresponding message pair. If the conversation prediction model (M2) is trained using the training data generated in this manner, the conversation prediction model (M2) may provide, as an output, an additional query message corresponding to a corresponding message pair upon reception of each message pair. That is, as illustrated in FIG. 14B, when the message pair of "Recommend me restaurants in Seoul" and "Restaurants XX, YY, and ZZ are recommended" is input, the conversation prediction model (M2) may output "Please book a table at restaurant XX" as a predicted query message.

As described above, the conversation prediction unit 110 may generate respective prediction query messages via the LLM-based response prediction, similarity-based response prediction, model-based response prediction, or the like. Here, the conversation prediction device 110 may generate respective precited query messages by utilizing all the LLM-based response prediction, similarity-based response prediction, and model-based response prediction, or may generate a predicted query message by utilizing at least any one of them.

The recommendation device 120 may extract a recommended prompt or a recommended plug-in corresponding to a predicted query message from among a plurality of registered prompts or plug-ins, and may provide the same to a user. Here, the recommendation device 120 may generate each recommended prompt or recommended plug-in corresponding to a predicted query message via LLM-based recommendation, similarity-based recommendation, model-based recommendation, or the like.

In the case of the LLM-based recommendation, the recommendation device 120 may input a second prompt to a large language model (L), and may request generating a recommended prompt or recommended plug-in.

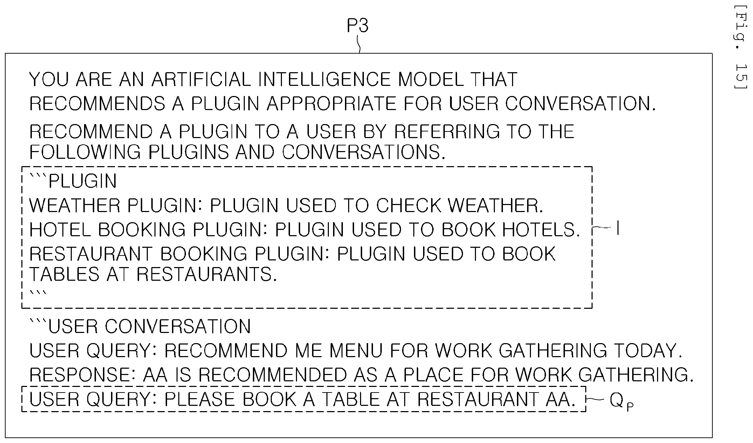

As illustrated in FIG. 15, a second prompt (P3) may provide description information (I) associated with each of a plurality of predefined registered prompts or plug-ins, a first query message, a first response message, and a predicted query message (Qₚ), and may request recommending a registered prompt or a plug-in. Here, the description information (I) may be generated by the plug-in management device 230, and may be stored in the plug-in DB (D31). That is, the recommendation device 120 may extract description information (I) associated with each plug-in and registered prompt from the plug-in DB (D31), and may include the same in the second prompt.

Subsequently, the recommendation device 120 may input the second prompt to the large language model (L), and the large language model (L) may extract and provide a recommended plug-in or a recommended registered prompt based on the description information (I), the first query message, the first response message, and the predicted query message.

In addition, in the case of the similarity-based recommendation, the recommendation device 120 may generate a vector for a predicted query message and vectors for registered query messages configured for a plurality of predefined registered prompts or plug-ins, and may obtain similarities between the vectors. Subsequently, the recommendation device 120 may determine, based on the similarities, a recommended prompt or recommended plug-in corresponding to the predicted query message.

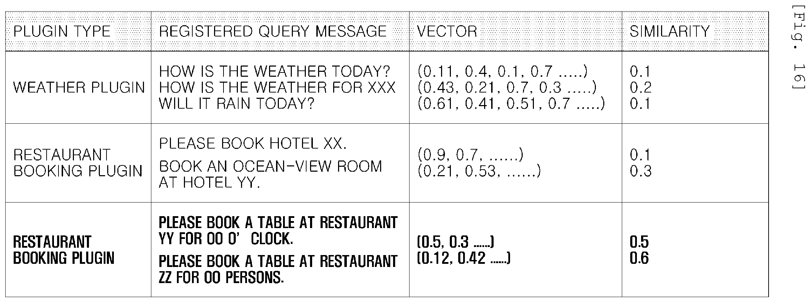

Referring to FIG. 16, previously registered query messages may be configured for plug-ins such as "weather plugin", "hotel booking plugin", "restaurant booking plugin", or the like. That is, in a plug-in information DB (D31, D32), a registered query message together with description information (I) for each plug-in may be stored, and a vector value for the corresponding registered query message may also be stored. For example, (0.11, 0.4, 0.1, 0.7, ...) and (0.46, 0.21, 0.7, 0.3, ...) which are vectors for the registered query messages "Check the weather for today" and "Check the weather for XXX" may be stored, respectively. Therefore, a similarity may be obtained by comparing the vector of each registered query message and the vector of the predicted query message, and the recommendation device 120 may provide "restaurant booking plugin" that shows highest similarities of 0.5 and 0.6 as a recommended plugin. Here, although the case of storing description information in the plug-in information DB (D31, D32) is illustrated, a registered prompt may be stored together with description information, and a recommended prompt may be provided in the same manner for a registered prompt.

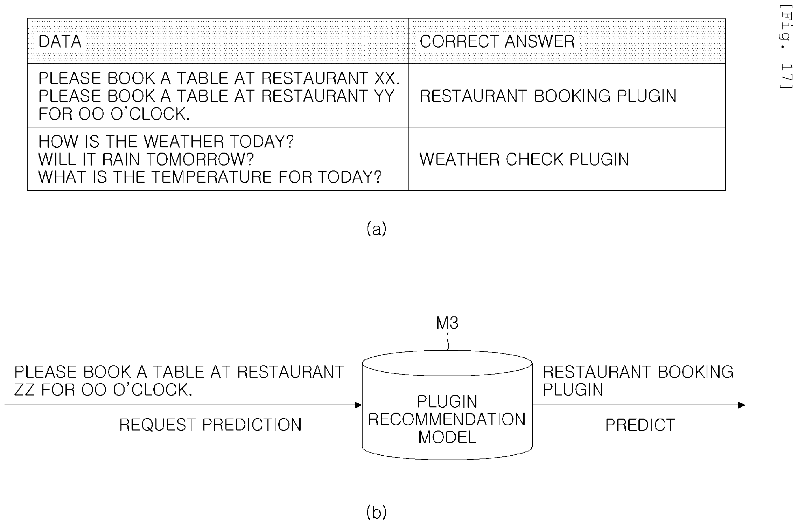

In the case of the model-based recommendation, the recommendation device 120 may extract a recommended prompt or a recommended plug-in corresponding to a predicted query message by using a recommendation model (M3). Here, the recommendation model (M3) may be generated via machine learning by using, as training data, recommended prompt or recommended plug-in models corresponding to each query message. Referring to FIG. 17A, in the case in which "restaurant booking plug-in" is executed in response to a query message such as "Please book a table at restaurant XX", "Please book a table at restaurant YY for OO o'clock", or the like, training data may be generated by labeling "restaurant booking plug-in" as a correct answer for "Please book a table at restaurant XX" and "Please book a table at restaurant YY for OO". In the same manner, when "weather check plug-in" is executed in response to a query message such as "Check the weather for today", "Will it rains tomorrow", "What is the temperature for today", or the like, "weather check application" may be labeled as a correct answer for "Check the weather for today", "Will it rains tomorrow", "What is the temperature for today", or the like.

Subsequently, with reference to Fig. 17B, when "Please book a table at restaurant ZZ for OO o'clock" corresponding to a predicted query message is input to the trained recommendation model (M3), the recommendation device 120 may provide "restaurant booking plug-in" in response to the corresponding predicted query message as a recommended plug-in. Here, although the case in which the recommendation model (M3) recommends a plug-in is illustrated, a recommended prompt may be provided in the same manner for a registered prompt.

In addition, the conversation prediction device 110 may generate a plurality of predicted query messages based on the LLM-based response prediction, similarity-based response prediction, and model-based response prediction, respectively, and the recommendation device 120 may recommend corresponding registered prompts or plug-ins based on the LLM-based recommendation, similarity-based recommendation, and model-based recommendation, for each of the plurality of predicted query messages.

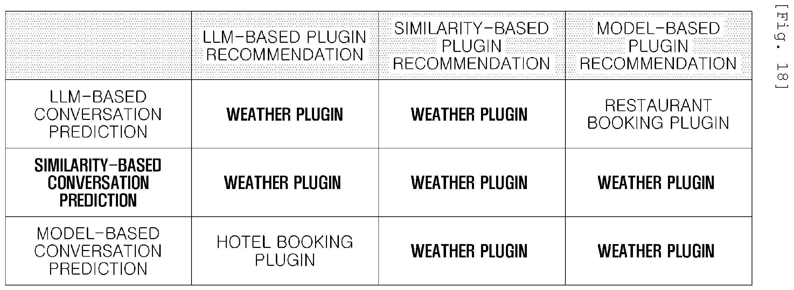

That is, with respect to three predicted query messages generated by the conversation prediction device 110, the recommendation device 120 may generate recommended prompts or recommended plug-ins by using the three methods and thus, a total of 9 recommended prompts or recommended plug-ins may be provided as illustrated in FIG. 18.

In this instance, based on the number of times that each registered prompt or plug-in is recommended, the recommendation device 120 may determine a final recommended prompt or recommended plug-in. For example, in FIG. 18, "weather plug-in" is recommended a highest number of times, that is, 7 times, and thus, "weather plug-in" may be selected as a recommended plug-in. In addition, "weather plug-in" is selected three times based on the similarity-based response prediction and thus, a predicted query message generated based on the similarity-based response prediction may be selected as a final predicted query message.

The recommendation device 120 may recommend a plug-in or a registered prompt that is recommended a highest number of times, but in some embodiments, a recommended plug-in or a recommended prompt may be determined according to various schemes. For example, the recommendation device 120 may provide a prompt or a plug-in that is recommended a number of times greater than or equal to a predetermined value (e.g., 4 times), or of which a rank based on the number of times of recommendation is greater than or equal to a predetermined rank (e.g., third rank), as a recommended prompt or a recommended plug-in. In this instance, a plurality of registered prompts or plug-ins exist that are recommended a number of times greater than or equal to a predetermined value, all of the corresponding registered prompts or plug-ins are provided as recommended prompts or recommended plug-ins. In addition, in some embodiments, when a plurality of plug-ins or registered prompts are recommended, their ranks may be determined based on the number of times of recommendation for each entity and may be provided to a user.

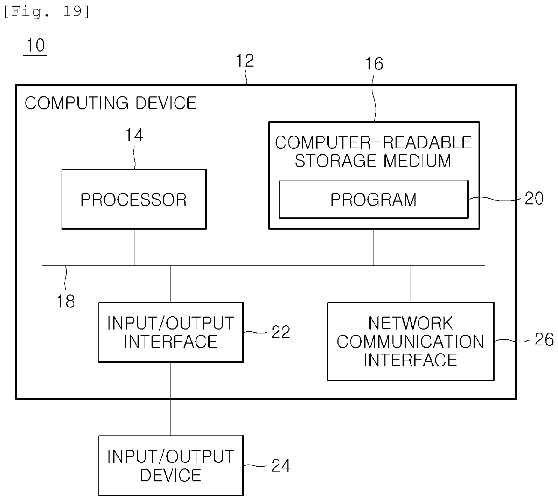

FIG. 19 is a block diagram illustrating a computing environment 10 suitable in illustrative embodiments. In the illustrated embodiments, the respective components may have different operations and capabilities, in addition to the operations and capabilities described below, and an additional component that is not described below may be included.

The illustrated computing environment 10 includes a computing device 12. According to an embodiment, the computing device 12 may be the recommendation device 100 according to an embodiment of the one or more examples.

The computing device 12 may include at least one processor 14, a computer-readable storage medium 16, and a communication bus 18. The processor 14 may enable the computing device 12 to operate according to the above-described illustrative embodiments. For example, the processor 14 may implement one or more programs stored in the computer-readable storage medium 16. The one or more programs may include one or more computer-executable instructions, and the computer-executable instructions may be configured to cause the computing device 12 to perform operations according to embodiments when the computer-executable instructions are executed by the processor 14.

The computer-readable storage medium 16 may be configured to store a computer-executable instruction or program code, program data, and/or other appropriate types of information. The program 20 stored in the computer-readable storage medium 16 may include a set of instructions executable by the processor 14. According to an embodiment, the computer-readable storage medium 16 may be a memory (a volatile memory such as a random-access memory, a non-volatile memory, or an appropriate combination thereof), one or more magnetic disc storage devices, optical disc storage devices, flash memory devices, and other types of storage media accessed by the computing device 12 and capable of storing required information, or an appropriate combination thereof.

The communication bus 18 may include the processor 14 and the computer-readable storage medium 16, and may mutually connect to various other components of the computing device 12.

The computing device 12 may include one or more input/output interfaces 22 that provides an interface for one or more input/output devices 24, and one or more network communication interfaces 26. The input/output interface 22 and the network communication interface 26 may be connected to the communication bus 18. The input/output device 24 may be connected to other components of the computing device 12 via the input/output interface 22. The illustrative input/output device 24 may include a pointing device (mouse, trackpad, etc.), a keyboard, a touch input device (touch pad, touch screen, etc.), a voice or sound input device, various types of sensor devices, and/or an input device such as a capturing device, and/or an output device such as a display device, a printer, a speaker, and/or a network card. The illustrative input/output device 24 may be included in the computing device 12 as one of the components that constitute the computing device 12, or may be connected to the computing device 12 as a separate device from the computing device 12.

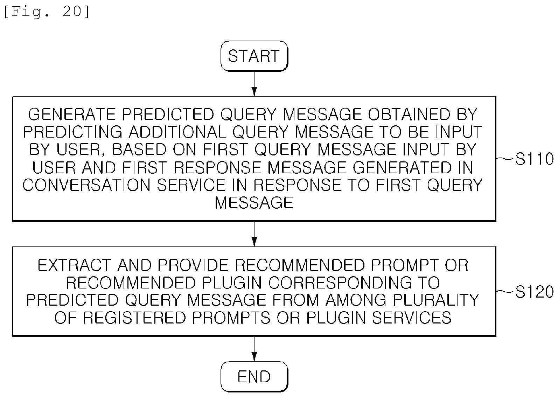

FIG. 20 is a block diagram illustrating a method of recommending a registered prompt or a plug-in service in a generative artificial intelligence-based conversation service according to an embodiment of the present disclosure. Here, each operation in FIG. 20 may be performed by a recommendation device according to an embodiment of the present disclosure.

Referring to FIG. 20, the recommendation device may generate a predicted query message obtained by predicting an additional query message to be input by a user, based on a first query message input to by the user and a first response message generated in a conversation service in response to the first query message, in operation S110. That is, based on the query message input by the user and the response message corresponding thereto, the recommendation device may predict the additional query message to be subsequently input by the user, and may generate the predicted query message.

Specifically, the recommendation device may perform LLM-based response prediction, similarity-based response prediction, and model-based response prediction, and may generate predicted query messages, respectively.

In the case of the LLM-based response prediction, the recommendation device may generate a first prompt that requests generating a predicted query message based on the first query message and the first response message, and may input the generated first prompt to a large language model (L) so as to generate a predicted query message. In this instance, the recommendation device may generate an additional prompt that further includes an example associated with an additional query message in the first prompt, and may generate a predicted query message. That is, the large language model (L) may be prompted based on few shot learning so that the accuracy of a predicted query message may be increased. In this instance, for few shot learning, the recommendation device may search for a similar conversation history corresponding to a message pair of the first query message and the first response message from a conversation history DB, and may further include the retrieved similar conversation history in the first prompt, so as to generate the additional prompt. That is, it may generate a target vector corresponding to the message pair of the first query message and the first response message, may obtain a similarity between the corresponding target vector and each vector in the conversation history DB, and may extract, as a corresponding similar conversation history, a conversation history corresponding to a vector having a highest similarity. In this instance, a second query message corresponding to the additional query message may be further included in the similar conversation history.

In addition, in the example of the similarity-based response prediction, the recommendation device may search for a similar conversation history corresponding to the message pair of the first query message and the first response message from the conversation history DB, and may extract a second query message corresponding to an additional query message from the retrieved similar conversation history, so as to generate a predicted query message.

Specifically, the recommendation device may generate a target vector corresponding to the message pair of the first query message and the first response message by using an embedding model, may search the conversation history DB for a vector of which a similarity to the target vector is greater than or equal to a predetermined value, and may extract the same as the similar conversation history.

In the example of the model-based response prediction, the recommendation device may generate a predicted query message corresponding to the first query message and the first response message, by using a previously generated conversation prediction model. Here, the conversation prediction model is generated via machine learning using training data, and the training data may be generated using each message pair of a query message and a response message and an additional query message input after the corresponding message pair.

In addition, the recommendation device may extract and provide a recommended prompt or a recommended plug-in corresponding to the predicted query message from among a plurality of registered prompts or plug-ins, in operation S120. Here, the recommendation device may generate a recommended prompt or recommended plug-in corresponding to each predicted query message via LLM-based recommendation, similarity-based recommendation, model-based recommendation, or the like.

In the case of the LLM-based recommendation, the recommendation device may input a second prompt to the large language model (L), and may request generating a recommended prompt or a recommended plug-in. Here, the second prompt may provide description information associated with each of a plurality of predefined registered prompts or plug-ins, the first query message, the first response message, and the predicted query message, and may request recommending a registered prompt or a plug-in Here, the description information may be stored in a plug-in DB, and the recommendation device may extract description information associated with each plug-in and registered prompt from the plug-in DB, and may include the same in the second prompt.

Subsequently, the recommendation device may input the second prompt to the large language model, and the large language model may extract and provide a corresponding recommended plug-in or recommended registered prompt based on the description information, the first query message, the first response message, and the predicted query message.

In addition, in the example of the similarity-based recommendation, the recommendation device may generate a vector for the predicted query message and vectors for registered query messages configured for a plurality of predefined registered prompts or plug-ins, and may obtain similarities between the vectors. That is, the recommendation device may determine, based on the similarities, a recommended prompt or recommended plug-in corresponding to the predicted query message.

In the example of the model-based recommendation, the recommendation device may extract a recommended prompt or recommended plug-in corresponding to the predicted query message by using a recommendation model. Here, the recommendation model may be generated via machine learning by using, as training data, recommended prompt or recommended plug-in models corresponding to each query message.

In addition, the recommendation device may generate a plurality of predicted query messages based on the LLM-based response prediction, similarity-based response prediction, and model-based response prediction, and subsequently, the recommendation device may recommend corresponding registered prompts or plug-ins based on the LLM-based recommendation, similarity-based recommendation, and model-based recommendation, for each of the plurality of predicted query messages.

That is, with respect to three predicted query messages, the recommendation device may generate recommended prompts or recommended plug-in by using the three methods and thus, a total of 9 recommended prompts or recommended plug-ins may be provided.

In this instance, based on the number of times that each registered prompt or plug-in is recommended, the recommendation device may determine a final recommended prompt or recommended plug-in. For example, the recommendation device may recommend a plug-in or registered prompt that is recommended a highest number of times, but in some embodiments, a recommended plug-in or a recommended prompt may be determined according to various schemes. That is, the recommendation device may provide a prompt or a plug-in that is recommended a number of times greater than or equal to a predetermined value (e.g., 4 times), or of which a rank based on the number of times of recommendation is greater than or equal to a predetermined rank (e.g., third place), as a recommended prompt or a recommended plug-in. In this instance, a plurality of registered prompts or plug-ins exist that are recommended a number of times greater than or equal to a predetermined value, all of the corresponding registered prompts or plug-ins are provided as recommended prompts or recommended plug-ins. In addition, in some embodiments, when a plurality of plug-ins or registered prompts are recommended, their ranks may be determined based on the number of times of recommendation for each entity and may be provided to a user.

The above-described present disclosure may be implemented as computer-readable code in a medium in which a program is recorded. The computer-readable medium may continuously store a computer-executable program, or may temporarily store the same for execution or downloading. In addition, the medium may be one of the various types of recording devices or storage devices provided in a form in which a single or a plurality of pieces of hardware are combined, and the medium is not limited to a medium that is directly connected to a predetermined computer system and may be distributed in a network. Examples of the medium may include a magnetic medium such as a hard disk, a floppy disk, and a magnetic tape, an optical recording medium such as CD-ROM and DVD, a magneto-optical medium such as a floptical disk or the like, ROM, RAM, flash memory, and the like, which are configured to store program instructions. In addition, examples of another medium may include a recording medium or a storage medium managed by an app store that distributes applications, a site that supplies or distributes various types of software, a server, or the like. Therefore, the detailed description should not be construed restrictively in all aspects, and may be considered as an example. The scope of the present disclosure should be determined by rational interpretation of attached claims, and all modifications made in the scope equivalent to that of the present disclosure should be included in the scope of the present disclosure.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is also inclusive of the claims and their equivalents, i.e., all variations within the scope of the claims and their equivalents are to be construed as being included in the disclosure.

## Claims

1. A processor-implemented method of recommending a registered prompt or recommending a plug-in in a generative artificial intelligence-based conversation service provided by a computing device, the method comprising:
generating a predicted query message that is generated by predicting an additional query message to be input by a user, based on a first query message input by the user and a first response message generated in the conversation service in response to the first query message; and
extracting and providing a recommended prompt or a recommended plug-in corresponding to the predicted query message from among a plurality of registered prompts or a plurality of plug-ins.

2. The method of claim 1, wherein the generating of the predicted query message comprises generating the predicted query message by inputting a first prompt that requests generating the predicted query message, while providing the first query message and the first response message to a large language model (LLM).

3. The method of claim 2, wherein the generating of the predicted query message comprises searching a conversation history database for a similar conversation history corresponding to a message pair of the first query message and the first response message, including the similar conversation history in the first prompt, and inputting the first prompt to the large language model, and
wherein the similar conversation history further comprises a second query message corresponding to the additional query message.

4. The method of claim 1, wherein the generating of the predicted query message comprises searching a conversation history database for a similar conversation history corresponding to a message pair of the first query message and the first response message, and extracting a second query message corresponding to the additional query message from the similar conversation history, to generate the predicted query message.

5. The method of claim 4, wherein the generating of the predicted query message comprises generating a target vector corresponding to the message pair of the first query message and the first response message by using an embedding model, searching the conversation history database for a first vector of which a similarity to the target vector is greater than or equal to a predetermined value, and extracting the similar conversation history, and
wherein the conversation history database converts a message pair of a query message input by the user or input by another user and a response message corresponding to the query message, into the first vector by using the embedding model, and stores the first vector.

6. The method of claim 1, wherein the generating of the predicted query message comprises generating the predicted query message corresponding to the first query message and the first response message based on a conversation prediction model, and
wherein the conversation prediction model is generated via a machine learning process performed using, as training data, each message pair of a query message and a response message, and an additional query message corresponding to the message pair.

7. The method of claim 1, wherein the providing of the recommended prompt comprises inputting, to a large language model, a second prompt that requests recommending the registered prompt or recommending the plug-in, while providing description information of each of a plurality of predefined registered prompts of the plurality of registered prompts or the plurality of plug-ins, the first query message, the first response message, and the predicted query message, so as to generate the recommended prompt or the recommended plug-in.

8. The method of claim 1, wherein the providing of the recommended prompt comprises generating respective vectors for the predicted query message and registered query messages configured for a plurality of predefined registered prompts of the plurality of registered prompts or the plurality of plug-ins, and generating the recommended prompt or the recommended plug-in corresponding to the predicted query message based on similarities between the respective vectors.

9. The method of claim 1, wherein the providing of the recommended prompt comprises extracting the recommended prompt or the recommended plug-in corresponding to the predicted query message by using a recommendation model, and
wherein the recommendation model is generated via a machine learning process performed using, as training data, a recommended prompt or recommended plug-in model corresponding to each query message.

10. The method of claim 1, wherein the generating of the predicted query message comprises generating a plurality of predicted query messages based on a large language model, a similarity to a conversation history, and a conversation prediction model,
wherein the providing of the recommended prompt comprises recommending a registered prompt of the plurality of registered prompts or a registered plug-in of the plurality of registered plug-ins corresponding to each of the plurality of predicted query messages, based on the large language model, similarities to query messages configured for a plurality of predefined registered prompts or plug-ins, and a recommendation model, and
wherein the recommended prompt or the recommended plug-in is determined based on a number of times that each registered prompt or registered plug-in is recommended.

11. The method of claim 10, wherein the providing of the recommended prompt comprises providing, as the recommended prompt or recommended plug-in, a prompt or a plug-in that is recommended a number of times greater than or equal to a predetermined value, or of which a rank based on the number of times of recommendation is greater than or equal to a predetermined rank.

12. The method of claim 11, wherein the providing of the recommended prompt comprises, when a plurality of registered prompts or plug-ins exist that are recommended a number of times greater than or equal to the predetermined value, providing all the registered prompts or plug-ins as the recommended prompts or the recommended plug-ins.

13. A computing device, comprising one or more processors, and configured to recommend a registered prompt or recommend a plug-in in a generative artificial intelligence-based conversation service, wherein the one or more processors are configured to:
generate a predicted query message that is generated by predicting an additional query message to be input by a user, based on a first query message input by the user and a first response message generated in the conversation service in response to the first query message; and
extract and provide a recommended prompt or a recommended plug-in corresponding to the predicted query message from among a plurality of registered prompts or a plurality of plug-ins.

14. The computing device of claim 13, wherein the generating of the predicted query message comprises generating the predicted query message by inputting a first prompt that requests generating the predicted query message, while providing the first query message and the first response message to a large language model (LLM).

15. The computing device of claim 13, wherein the generating of the predicted query message comprises searching a conversation history database for a similar conversation history corresponding to a message pair of the first query message and the first response message, and extracting a second query message corresponding to the additional query message from the similar conversation history, to generate the predicted query message.
